# EUROPEAN PATENT APPLICATION

(11) **EP 4 546 894 A1**
(43) Date of publication of application: **30.04.2025**
(21) Application number: 23857572.4
(22) Date of filing: 19.07.2023
(51) Int. Cl.: H04W 52/36, H04W 52/28, H04W 72/04, H04B 1/3827

(54) **METHOD FOR CONTROLLING TRANSMISSION POWER OF WIRELESS COMMUNICATION, AND ELECTRONIC DEVICE USING METHOD**

(30) Priority: 26.08.2022 KR 20220107494; 04.10.2022 KR 20220126118
(71) Applicant: Samsung Electronics Co., Ltd., Suwon-si, Gyeonggi-do 16677 (KR)
(72) Inventor: HEO, Wonhyung, Suwon-si Gyeonggi-do 16677 (KR); KANG, Youngjin, Suwon-si Gyeonggi-do 16677 (KR); MIN, Jungsik, Suwon-si Gyeonggi-do 16677 (KR); PARK, Daehee, Suwon-si Gyeonggi-do 16677 (KR); SON, Byoungil, Suwon-si Gyeonggi-do 16677 (KR); AN, Sungchan, Suwon-si Gyeonggi-do 16677 (KR); LEE, Dongjun, Suwon-si Gyeonggi-do 16677 (KR); JANG, Joonwon, Suwon-si Gyeonggi-do 16677 (KR); CHAE, Kyumin, Suwon-si Gyeonggi-do 16677 (KR)
(74) Representative: Gulde & Partner
(86) International application number: PCT/KR2023/010349
(87) International publication number: WO 2024/043536

(57) **Abstract**

An electronic device comprising an antenna, a communication circuit, a memory, and a processor is disclosed. The processor can identify transmission power using a frequency corresponding to resource block information allocated to the electronic device. The transmission power can be generated on the basis of interpolation of power limit values corresponding to a band allocated to the electronic device.

## Description

### TECHNICAL FIELD

Various embodiments disclosed herein relate to techniques for controlling the intensity of transmission power in an electronic device when the electronic device performs wireless communication.

### BACKGROUND ART

Electronic devices perform back-off of power transmitted through their antennas to satisfy the specific absorption rate (SAR) standard. The same back-off value is applied within one band. The back-off value of the band is set based on a situation where an SAR value is highest in the highest frequency channel within the band.

### DISCLOSURE OF THE INVENTION

### TECHNICAL PROBLEM

An electronic device may perform back-off of transmission power using the same back-off value within a band, regardless of allocated radio resources. The back-off value may be set depending on the band to which the allocated radio resources belong. For example, radio resources contained in relatively low frequency channels within the band may be allocated to the electronic device. Even within the same band, the SAR may vary depending on the frequency of a channel. Even in the case of a situation where a low-frequency channel is allocated and thus the SAR value is low, the electronic device may perform back-off corresponding to a back-off value set for the band. Even in the case where a radio resource with a low SAR value is allocated, when the back-off equal to the back-off value set for the band is performed, the amount of power transmitted by the electronic device may be unnecessarily reduced.

The various embodiments disclosed herein are intended to provide an electronic device capable of increasing power transmitted by an electronic device within a range satisfying the specific absorption rate standard by controlling a back-off value according to a radio resource allocated within a band.

### TECHNICAL SOLUTION

According to an aspect of the disclosure, there is provided an electronic device including an antenna, communication circuitry electrically connected to the antenna, memory that stores interpolation data related to a power limit value according to a frequency, and a processor electrically connected to the communication circuitry. The processor receives, from an external network, band information associated with a band for wireless communication, bandwidth information associated with a frequency bandwidth, and radio resource information related to at least one resource block (RB). The processor identifies a highest frequency value of the at least one resource block. The processor identifies a final power limit value using a value obtained by mapping the highest frequency value to the interpolation data stored in the memory. The processor controls transmission power using the communication circuitry and the antenna using the final power limit value. The interpolation data is generated based on interpolation of at least two power limit values corresponding to the band.

In addition, according to another aspect of the disclosure, there is provided a method of controlling an electronic device including receiving, from an external network, band information associated with a band for wireless communication of the electronic device, bandwidth information associated with a frequency bandwidth, and radio resource information related to at least one resource block (RB). The method includes identifying a highest frequency value of the at least one resource block. The method includes identifying a final power limit value using a value obtained by mapping the highest frequency value to interpolation data stored in memory of the electronic device. The method includes controlling power of transmission signal using the final power limit value. The interpolation data is generated based on interpolation of at least two power limit values corresponding to the band.

According to still another aspect of the disclosure, there is provided an electronic device including an antenna, communication circuitry electrically connected to the antenna, and a processor electrically connected to the communication circuit. The processor receives, from an external network, band information associated with a band that the communication circuitry uses for wireless communication, bandwidth information associated with a frequency bandwidth that the communication circuitry uses for the wireless communication, and radio resource information related to at least one resource block (RB) allocated for use by the communication circuitry for the wireless communication. The processor generates interpolation data by interpolating at least two power limit values included in the band. The processor identifies a highest frequency value of the at least one resource block. The processor maps the highest frequency value to the interpolation data. The processor controls power transmitted by the communication circuitry to the antenna using a final power limit value mapped to the highest frequency value in interpolation data.

### ADVANTAGEOUS EFFECTS

According to embodiments disclosed herein, power transmitted by an electronic device can be increased within a range satisfying the specific absorption rate standard.

According to embodiments disclosed herein, an electronic device can improve communication quality by controlling transmission power based on a frequency of a channel.

Besides, various effects may be provided that are directly or indirectly identified through the disclosure.

### BRIEF DESCRIPTION OF THE DRAWINGS

FIG. 1 is a block diagram illustrating an electronic device in a network environment according to various embodiments.
FIG. 2 is a diagram illustrating that an electronic device according to the disclosure performs wireless communication.
FIG. 3 is a flowchart illustrating a method of controlling transmission power of wireless communication performed by an electronic device according to the disclosure.
FIG. 4 is a view illustrating that an electronic device according to the disclosure generates interpolation data based on at least two power limit values included in a band.
FIG. 5 is a view illustrating that an electronic device according to the disclosure maps a highest frequency value of a resource block to interpolation data.
FIG. 6 is a view illustrating that an electronic device according to the disclosure maps a highest frequency value of consecutive resource blocks to interpolation data.
FIG. 7 is a view illustrating that a highest frequency value of each of spaced resource blocks is mapped to interpolation data of an electronic device according to the disclosure.
FIG. 8 is a view illustrating a specific absorption rate value according to frequency of a resource block allocated to an electronic device according to the disclosure within a band.
FIG. 9 is a view illustrating that an amplifier connected to an antenna of an electronic device according to the disclosure generates interpolation data when the amplifier has different gain values depending on the frequency.
FIG. 10 is a view illustrating that an amplifier connected to an antenna of an electronic device according to the disclosure generates interpolation data when the amplifier has different gain values depending on the frequency.
FIG. 11 is a flowchart illustrating a method of controlling transmission power of wireless communication performed by an electronic device according to the disclosure.

With regard to descriptions of the drawings, the same or similar reference numerals can be used for the same or similar components.

### MODE FOR CARRYING OUT THE INVENTION

Hereinafter, various embodiments of the disclosure may be described with reference to accompanying drawings. Accordingly, those of ordinary skill in the art will recognize that modification, equivalent, and/or alternative on the various embodiments described herein can be variously made without departing from the scope and spirit of the disclosure. With regard to description of drawings, similar components may be marked by similar reference numerals.

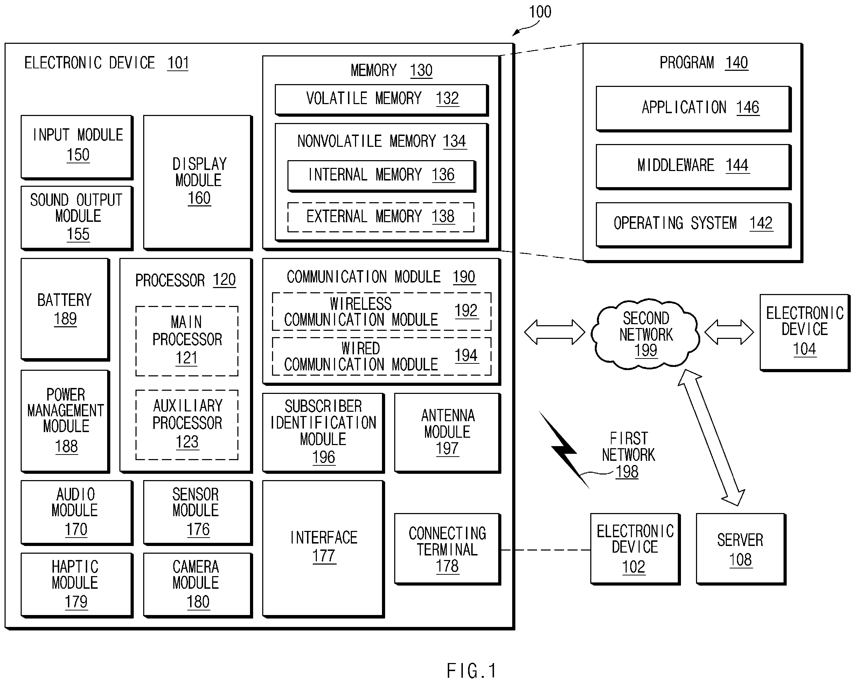

FIG. 1 is a block diagram illustrating an electronic device 101 in a network environment 100 according to various embodiments. Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thererto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

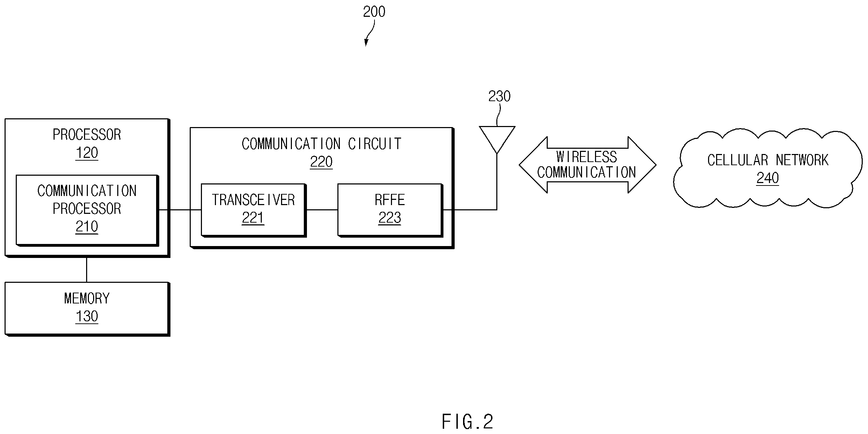

FIG. 2 is a diagram 200 illustrating that an electronic device (e.g., the electronic device 101 in FIG. 1) according to the disclosure performs wireless communication.

According to an embodiment, an electronic device 101 may include a processor 120, memory 130, communication circuitry 220, and an antenna 230. The processor 120 may include a communication processor (CP) 210. The communication processor 210 may be formed in a single chip or single package with the processor 120. The communication circuit 220 may include a transceiver 221 and a radio frequency front end (RFFE) 223.

The communication processor 210 may support establishment of a communication channel to be used for wireless communication with a cellular network 240. The communication processor 210 may perform wireless communication using the established communication channel. When transmitting a signal, the communication processor 210 may generate a baseband signal for performing wireless communication. When transmitting a signal, the communication processor 210 may transmit the baseband signal to the transceiver 221. Upon receiving a signal, the communication processor 210 may receive a baseband signal from the transceiver 221. Upon receiving a signal, the communication processor 210 may process the baseband signal.

The transceiver 221 may convert the baseband signal into an RF signal (e.g., up-converting) or convert an RF signal into a baseband signal (e.g., down-converting) to perform wireless communication. In case of transmitting a signal, the transceiver 221 may receive the baseband signal from the communication processor 210. In case of transmitting a signal, the transceiver 221 may convert the baseband signal into an RF signal of a frequency band used in the cellular network 240. In case of transmitting a signal, the transceiver 221 may transmit the RF signal to the antenna 230 through the RFFE 223. In case of receiving a signal, the transceiver 221 may receive a pre-processed RF signal from the RFFE 223. Upon receiving a signal, the transceiver 221 may convert the pre-processed RF signal into the baseband signal. Upon receiving, the transceiver 221 may transmit the baseband signal to the communication processor 210.

The RFFE 223 may pre-process the RF signal received from the cellular network 240 through an antenna 230. The RFFE 223 may transmit the pre-processed RF signal to the transceiver 221. For example, the RFFE 223 may include at least one of at least one amplifier, at least one filter, or at least one phase shifter for amplifying a signal. In an example, the communication processor 210 may control the transmission power of a signal transmitted through the antenna 230 by controlling the gain of at least one amplifier included in the RFFE 223. The communication processor 210 may control the amount of signal amplification performed by the RFFE 223 directly or through a transceiver 221.

The electronic device 101 may transmit the RF signal received from the RFFE 223 through the antenna 230 or receive the RF signal from the cellular network 240. When the electronic device 101 supports 5G(5^{th} generation) communication, the antenna 230 may have an array structure including a plurality of radiating elements arranged to support beamforming.

Meanwhile, electromagnetic waves generated when transmitting the RF signal from the electronic device 101 may affect a user of the electronic device 101. The value of electromagnetic waves absorbed by the human body may be defined as the Specific Absorption Rate (SAR). Specific absorption rate may be defined as a watt (W) value of electromagnetic energy absorbed by 1 kg of human body per unit time. The specific absorption rate may vary depending on the frequency of the RF signal being transmitted. For example, the specific absorption rate may have a physical property that increases as the frequency of the transmitted RF signal increases. The specific absorption rate may vary depending on the amount of radio resources allocated to the electronic device 101 transmitting the RF signal. For example, a property may be provided in which as the number of resource blocks (RBs) allocated to an electronic device 101 decreases, the observed specific absorption rate increases. In the disclosure below, the resource blocks allocated to the electronic device 101 may refer to the number of resource blocks allocated to the electronic device 101 in the frequency domain. For example, the resource blocks allocated to the electronic device 101 may refer to the number of resource blocks in the frequency domain allocated for uplink transmission of the electronic device 101 at one point in time. In an example, the electronic device 101 may receive an uplink grant from a base station of the cellular network 240 and identify the number of resource blocks allocated to the electronic device 101 from the uplink grant.

The communication processor 210 may control the intensity of the RF signal transmitted through the antenna 230 based on the specific absorption rate. The communication processor 210 may limit a maximum size of the RF signal based on the SAR. The communication processor 210 may set a power limit value Plimit to limit the maximum amount of the RF signal for each band to which the RF signal belongs. The power limit value may be set to a maximum power value established to keep the SAR of the transmitted RF signal at or below a specified standard. The communication processor 210 may set the power limit value by assuming a situation in which the highest frequency within the band is used and a radio resource with the smallest frequency bandwidth is allocated. The communication processor 210 may store the power limit value set for each band in the memory 130. The communication processor 210 may limit the intensity of the RF signal transmitted by the electronic device 101 through the antenna 230 at or below a power limit value set for the band to which the RF signal belongs.

According to conventional methods of controlling the transmission power of wireless communication, by applying the same power limit value within the band, even when a lower frequency within the band is used or radio resources with a larger frequency bandwidth are allocated, the intensity of the RF signal is uniformly limited to the power limit value or below, resulting in an unnecessary reduction in the intensity of the RF signal.

Hereinafter, a method of controlling the transmission power of wireless communication according to the disclosure is described. The method of controlling transmission power of wireless communication according to the disclosure may provide a method of applying different power limit values according to frequencies of radio resources allocated within a band. The method of controlling the transmission power of wireless communication according to the disclosure may provide a method of applying a higher power limit value when a lower frequency is used within a band or when a radio resource with a larger frequency bandwidth is allocated.

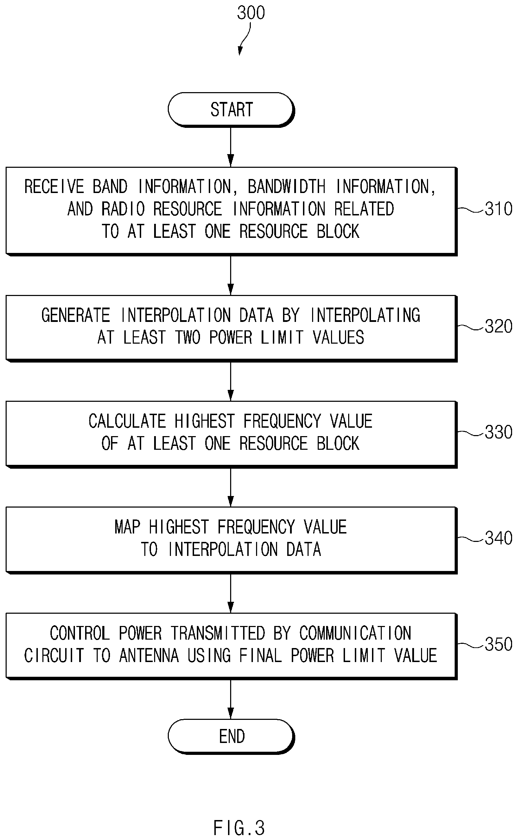

FIG. 3 is a flowchart 300 illustrating a method of controlling transmission power of wireless communication performed by an electronic device (e.g., the electronic device 101 in FIG. 1) according to the disclosure.

According to an embodiment, a processor (e.g., the communication processor 210 in FIG. 2) of the electronic device 101 may receive band information, bandwidth information, and radio resource information related to at least one resource block in operation 310. For example, the electronic device 101 may obtain or identify the band information, bandwidth information, and radio resource information from information received from a base station (e.g., the base station of the cellular network 240 in FIG. 2).

The band information may be information associated with the band that communication circuitry of the electronic device 101 (e.g., the communication circuit 220 in FIG. 2) uses for wireless communication. The band may be, for example, a frequency range specified by a 3^{RD} generation partnership project (3GPP) standard. For example, based on the frequency division duplexing (FDD) mode, the bands used for LTE communication may include B1 to B32, B65 to B76, and B85 to B88 bands. The electronic device 101 may obtain the band information during a process of searching for a cell to which the electronic device 101 is connected or connecting (e.g., attaching) a cell. The memory (e.g., the memory 130 in FIG. 2) may store information about the band (e.g., information about the band associated with the country, mobile network operation, and/or radio access technology (RAT)).

The bandwidth information may be information associated with a frequency bandwidth of a cell connected to the electronic device 101 by the base station. For example, the electronic device 101 may obtain the bandwidth information by receiving system information from the cell.

The radio resource information may be information related to at least one resource block allocated to the electronic device 101 for use in the wireless communication. The resource block may be a unit block that may be allocated to the electronic device 101 in terms of frequency. For example, the resource block may have a frequency bandwidth of 0.2 MHz. The electronic device 101 may be allocated at least one resource block that may be used for uplink signal transmission of the electronic device 101 from the base station. The electronic device 101 may receive information for allocating one or more resource blocks within a band from the base station (e.g., information on the number of resource blocks and information on a starting resource block). For example, the electronic device 101 may be allocated a plurality of consecutive resource blocks on a frequency axis. For example, the electronic device 101 may be allocated a plurality of resource blocks spaced apart from each other on the frequency axis. The number of at least one resource block allocated to the electronic device 101 may be variably set depending on a communication situation, a total number of terminals connected to the base station to which the electronic device 101 is connected, and the type of data transmitted through wireless communication performed by the electronic device 101.

The electronic device 101 may receive the band information, the bandwidth information, and the radio resource information from an external network (e.g., the cellular network 240 in FIG. 2). For example, the electronic device 101 may obtain the band information, the bandwidth information, and/or the radio resource information through network search (e.g., cell search), connection (e.g., attach), and/or resource allocation (e.g., uplink grant).

The processor 210 of the electronic device 101 may interpolate at least two power limit values in operation 320 to generate interpolation data.

The power limit value may represent a maximum transmission power value of the communication circuit 220 set to maintain the specific absorption rate (SAR) by an RF signal output through an antenna (e.g., the antenna 230 in FIG. 2) of the electronic device 101 below the specified specific absorption rate standard. The power limit value may vary depending on the frequency. Since the SAR increases as the frequency increases due to physical properties, the power limit value (e.g., maximum transmission power) may decrease as the frequency increases.

At least two power limit values, satisfying the specific absorption rate standard at a frequency corresponding to at least one resource block, may be set. The at least two power limit values may be obtained by measuring power limit values at at least two frequencies belonging to the band. The at least two power limit values may be a lowest power limit value, which is a power limit value of the lowest resource block of the band, and a highest power limit value, which is a power limit value of the highest resource block of the band. The lowest resource block of the band may be a resource block with the lowest frequency among a plurality of resource blocks belonging to the band. The highest resource block of the band may be a resource block with the highest frequency among the plurality of resource blocks belonging to the band. For example, when there are 50 resource blocks in a B1 band, the lowest resource block in the B1 band may be 0RB, which has the lowest frequency among the 50 resource blocks, and the highest resource block may be 49RB, which has the highest frequency among the 50 resource blocks.

The processor 210 may perform an operation that calculates values between the two values by connecting the two values with a straight line in order to perform an operation to interpolate the two values. The processor 210 may calculate power limit values between the two power limit values by connecting the two power limit values with a straight line in order to interpolate two power limit values. Accordingly, the processor 210 may calculate power limit values in a frequency range between frequency values corresponding to the two power limit values, respectively. For example, the processor 210 may calculate power limit values corresponding to frequency values belonging to the entire band when interpolating the lowest power limit value and the highest power limit value. The processor 210 may generate data in the form of a straight-line graph on the frequency axis using power limit values obtained as a result of interpolating two power limit values. The data in the form of a straight-line graph generated by the processor 210 may be defined as interpolation data. The processor 210 may store interpolation data in the memory 130.

As described above, the processor 210 may store interpolation data related to the power limit values according to the frequency in memory (e.g., the memory 130 in FIG. 2). As another example, the manufacturer of the electronic device 101 may store interpolation data generated by interpolating at least two power limit values in the memory 130 when the electronic device 101 is released.

The processor 210 of the electronic device 101 may calculate the highest frequency value of at least one resource block in operation 330. The processor 210 may calculate the highest frequency value of at least one resource block allocated to the electronic device 101 by adding a frequency range of at least one resource block to a starting frequency of at least one resource block allocated to the electronic device 101. For example, when the frequency range (e.g., bandwidth) of one resource block is 0.2 MHz, the processor 210 may obtain the highest frequency value of at least one resource block allocated to the electronic device 101 by adding a value obtained by multiplying the number of allocated resource blocks by 0.2 MHz to the starting frequency of at least one resource block allocated to the electronic device 101.

The processor 210 of the electronic device 101 may map the highest frequency value to the interpolation data in operation 340. The processor 210 may obtain the power limit value at the highest frequency value as a final power limit value. The final power limit value may vary depending on the highest frequency value of at least one allocated resource block. When the highest frequency value is lowered, the final power limit value may increase.

The processor 210 of the electronic device 101 may limit the power transmitted by the communication circuit 220 to the antenna 230 using the final power limit value in operation 350. The processor 210 may limit a maximum amount of power transmitted by the communication circuit 220 to the antenna 230 to the final power limit value. The processor 210 may increase the maximum amount of power transmitted by the communication circuit 220 to the antenna 230 when the highest frequency value is lowered. When the highest frequency value is lowered as described above, the processor 210 may increase the power transmitted by the electronic device 101 through the antenna 230 within a range that satisfies the specific absorption rate standard.

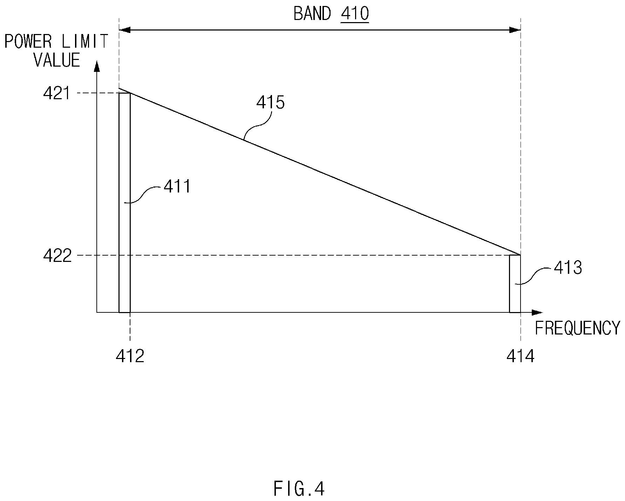

FIG. 4 is a view illustrating that an electronic device (e.g., the electronic device 101 in FIG. 1) according to the disclosure generates interpolation data 415 based on at least two power limit values 421 and 422 included in a band 410.

For example, the band 410 may be set by dividing the frequency into ranges according to a mode of wireless communication, an operator providing the wireless communication, and the generation of the wireless communication. The band 410 may include a plurality of channels. Each of the channels may include a plurality of resource blocks. For example, the frequency range of one resource block may be 0.2 MHz.

A lowest resource block 411 may be a resource block having the lowest frequency among the resource blocks included in the band 410. A processor (e.g., the communication processor 210 in FIG. 2) of the electronic device 101 may obtain a lowest power limit value 421 by measuring a power limit value at a highest frequency 412 of the lowest resource block 411. For example, when the band 410 includes 50 resource blocks from 0RB to 49RB in order of frequency size, since 0RB is the lowest resource block 411, the processor 210 may obtain the lowest power limit value 421 by measuring the power limit value at the highest frequency 412 of 0RB.

A highest resource block 413 may be a resource block having the highest frequency among the resource blocks included in the band 410. The processor 210 may obtain a highest power limit value 422 by measuring the power limit value at a highest frequency 414 of the highest resource block 413. For example, when the band 410 includes 50 resource blocks from 0RB to 49RB in order of frequencies, since 049B is the highest resource block 413, the processor 210 may obtain the highest power limit value 422 by measuring the power limit value at the highest frequency 414 of 49RB.

In an example, the processor 210 may interpolate the lowest power limit value 421 and the highest power limit value 422 to generate the interpolation data 415 of the band 410. The power limit values may have a linear relationship within the band 410. The processor 210 may interpolate the lowest power limit value 421 and the highest power limit value 422 to calculate a power limit value corresponding to all frequencies within the band 410. The processor 210 may store the generated interpolation data 415 in memory (e.g., the memory 130 in FIG. 2).

As another example, the method of generating interpolation data 415 based on at least two power limit values 421 and 422 included in the band 410 described with reference to FIG. 4 may be performed by the manufacturer of the electronic device 101. For example, the manufacturer of the electronic device 101 may generate the interpolation data 415 when manufacturing the electronic device 101, store the generated interpolation data 415 in the memory (e.g., the memory 130 in FIG. 2), and then ship the electronic device 101.

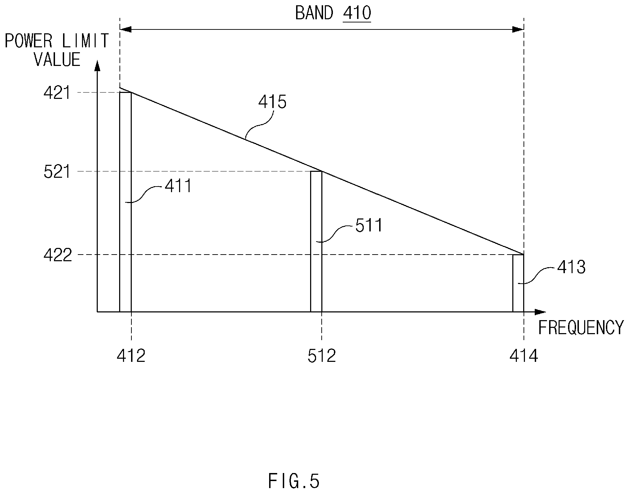

FIG. 5 is a view illustrating that an electronic device (e.g., the electronic device 101 in FIG. 1) according to the disclosure maps a highest frequency value 512 of a resource block 511 to interpolation data 415.

According to an embodiment, the electronic device 101 may be allocated the resource block 511 from an external network. The electronic device 101 may receive information related to the resource block 511 from the external network. The electronic device 101 may identify a starting frequency of the allocated resource block 511. For example, a frequency range of the resource block 511 may be set to 0.2 MHz. A processor (e.g., the communication processor 210 in FIG. 2) of the electronic device 101 may calculate the highest frequency value 512 of the allocated resource block 511. The processor 210 may map the highest frequency value 512 to the interpolation data 415.

The processor 210 may store at least two power limit values 421 and 422 and the interpolation data 415 in the memory (e.g., the memory 130 in FIG. 2). The processor 210 may load the interpolation data 415 from the memory 130 in response to receiving radio resource information. The processor 210 may map the highest frequency value 512 to the interpolation data 415 to calculate a final power limit value 521.

The processor 210 may map the highest frequency value 512 to the interpolation data 415 to calculate the final power limit value 521 of the resource block 511. The processor 210 may set the final power limit value 521 so that the final power limit value 521 satisfies the specific absorption rate (SAR) standard at the highest frequency value 512. The SAR standard may have different values depending on the frequency. Accordingly, the final power limit value 521 may have different values depending on the frequency. As the frequency increases, the SAR increases, requiring more stringent limits, which may result in a decrease in the final power limit value 521. As the frequency decreases, the degree of power limitation may be relaxed, which may increase the final power limit value 521.

The processor 210 may limit the power transmitted by the communication circuit 220 to the antenna 230 using the final power limit value 521. The final power limit value 521 may have a higher value than the highest power limit value 422 of the band 410. By limiting the power transmitted by the communication circuit 220 to the antenna 230 using the final power limit value 521, the processor 210 may increase the power transmitted by the communication circuit 220 to the antenna 230 compared to when the power transmitted by the communication circuit 220 to the antenna 230 is limited using the highest power limit value 422 per band 410. The processor 210 may increase the power transmitted by the electronic device 101 through the antenna 230 within a range that satisfies the SAR standard by limiting the power transmitted by the communication circuit 220 to the antenna 230 using the final power limit value 521.

For example, the method of mapping the highest frequency value 512 of the resource block 511 to the interpolation data 415 described with reference to FIG. 5 may be performed by the manufacturer of the electronic device 101. The manufacturer of the electronic device 101 may map the highest frequency value 512 of the resource block 511 to the interpolation data 415 when manufacturing the electronic device 101, and store the interpolation data 415 including the mapped value in the memory (e.g., the memory 130 in FIG. 2), and ship the electronic device 101. The electronic device 101 may identify the transmitted power using the value stored in the memory.

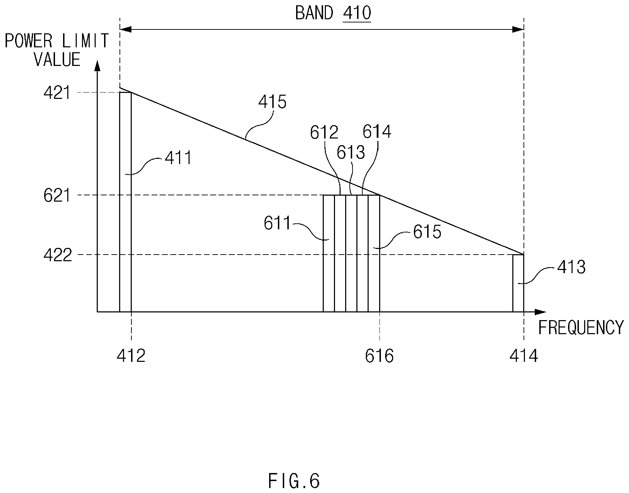

FIG. 6 is a view illustrating that an electronic device (e.g., the electronic device 101 in FIG. 1) according to the disclosure maps a highest frequency value 616 of consecutive resource blocks 611, 612, 613, 614, and 615 to interpolation data 415.

According to an embodiment, the electronic device 101 may be consecutively allocated a plurality of resource blocks 611, 612, 613, 614, and 615 included in the band 410 on a frequency axis. For example, the electronic device 101 may be allocated five consecutive resource blocks 611, 612, 613, 614, and 615 on the frequency axis of the band 410 among the resource blocks included in the band 410 from an external network (e.g., the cellular network 240 in FIG. 2).

A processor (e.g., the communication processor 210 in FIG. 2) of the electronic device 101 may map the highest frequency value 616 included in a highest resource block 615 among at least one resource block 611, 612, 613, 614, and 615 to the interpolation data 415 when the plurality of resource blocks 611, 612, 613, 614, and 615 are consecutively allocated on the frequency axis of the band 410. For example, the processor 210 may map the highest frequency value 616 included in the highest resource block 615 among five consecutive resource blocks 611, 612, 613, 614, and 615 to the interpolation data 415.

The processor 210 may obtain a final power limit value 621 by mapping the highest frequency value 616 included in the highest resource block 615 to the interpolation data 415. When the processor 210 is allocated the plurality of consecutive resource blocks 611, 612, 613, 614, and 615, by mapping the highest frequency value 616 included in the highest resource block 615 to the interpolation data 415, the processor 210 may calculate the final power limit value 621 while reducing the number of times the highest frequency value 616 is mapped to the interpolation data 415. The processor 210 may calculate a single final power limit value 621 that satisfies the SAR standard for the plurality of consecutive resource blocks 611, 612, 613, 614, and 615. The single final power limit value 621 may have a higher value than the highest power limit value 422 of the band 410. The processor 210 may limit the power transmitted by the communication circuit 220 to the antenna 230 using the single final power limit value 621. By limiting the power transmitted by the communication circuit 220 to the antenna 230 using the single final power limit value 621, the processor 210 may increase the power transmitted by the communication circuit 220 to the antenna 230 compared to when the power transmitted by the communication circuit 220 to the antenna 230 is limited using the highest power limit value 422 per band 410.

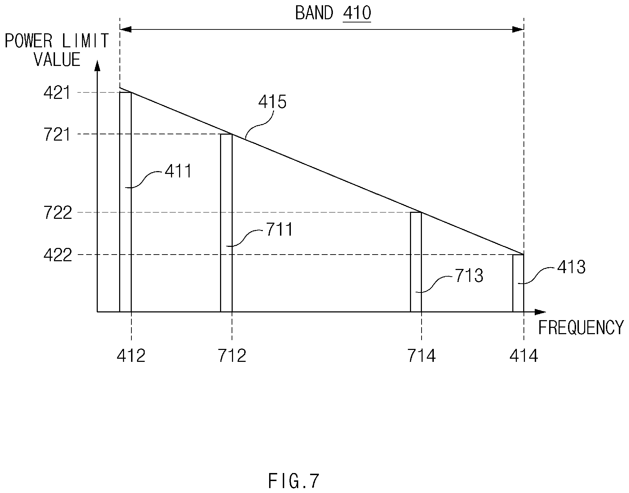

FIG. 7 is a view illustrating that highest frequency values 712 and 714 of respective resource blocks 711 and 713 that are spaced apart are mapped to interpolation data 415 of an electronic device (e.g., the electronic device 101 in FIG. 1) according to the disclosure.

According to an embodiment, the electronic device 101 may be allocated resource blocks 711 and 713 included in the band 410 to be spaced apart from each other on the frequency axis. For example, the electronic device 101 may be allocated a first resource block 711 and a second resource block 713, which are spaced apart on the frequency axis of the band 410 among the resource blocks included in the band 410, from an external network (e.g., the cellular network 240 in FIG. 2).

A processor (e.g., the communication processor 210 in FIG. 2) of the electronic device 101 may map the first frequency value 712, which is the highest frequency value of the first resource block 711, and the second frequency value 714, which is the highest frequency value of the second resource block 713, to the interpolation data 415 when the first resource block 711 and the second resource block 713 are allocated to be spaced apart from each other on the frequency axis of the band 410. The processor 210 may map the respective highest frequency values 712 and 714 of the plurality of resource blocks 711 and 713 to the interpolation data 415 when each of the plurality of resource blocks 711 and 713 is allocated to be spaced apart on the frequency axis of the band 410.

The processor 210 may obtain a plurality of final power limit values 721 and 722 by mapping the respective highest frequency values 712 and 714 of the plurality of resource blocks 711 and 713 that are spaced apart on the frequency axis of the band 410 to the interpolation data 415. The processor 210 may calculate the plurality of final power limit values 721 and 722 that satisfy the SAR standard for the plurality of resource blocks 711 and 713 that are spaced apart on the frequency axis of the band 410, respectively. The processor 210 may limit the power transmitted by the communication circuit 220 to the antenna 230 using the plurality of final power limit values 721 and 722. Each of the plurality of final power limit values 721 and 722 may have a value higher than the highest power limit value 422 of the band 410. By limiting the power transmitted by the communication circuit 220 to the antenna 230 using the plurality of final power limit values 721 and 722, the processor 210 may increase the power transmitted by the communication circuit 220 to the antenna 230 compared to when the power transmitted by the communication circuit 220 to the antenna 230 is limited using the highest power limit value 422 per band 410.

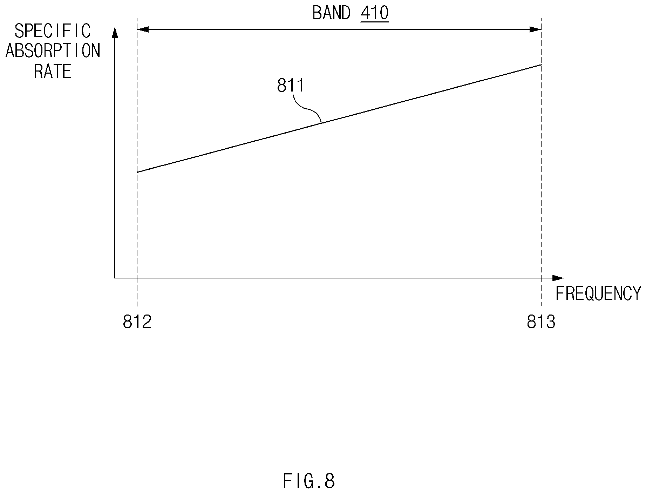

FIG. 8 is a view illustrating a specific absorption rate value 811 according to frequency of a resource block allocated to an electronic device (e.g., the electronic device 101 in FIG. 1) according to the disclosure within a band 410.

According to an embodiment, when the electronic device 101 is allocated a resource block having a high frequency within the band 410, a SAR value 811 may increase due to physical properties. As the SAR value 811 increases, a power limit value may decrease. Accordingly, when the electronic device 101 is allocated a resource block having a low frequency, the power limit value increases so that the SAR standard may be satisfied even when an RF signal of higher intensity is transmitted. When the electronic device 101 is allocated the resource block having a low frequency, the amount of power transmitted by the communication circuit 220 to the antenna 230 under the condition that the specific absorption rate standard is satisfied may be increased.

A processor (e.g., the communication processor 210 in FIG. 2) of the electronic device 101 may map a highest frequency of the resource block to which the electronic device 101 is allocated to interpolation data (e.g., the interpolation data 415 in FIGS. 4 to 7) to calculate a final power limit value. The processor 210 may control the amount of power transmitted by the communication circuit 220 to the antenna 230 using the final power limit value. The final power limit value may have a value higher than a highest power limit value (e.g., the highest power limit value 422 in FIG. 4) of the band 410. The processor 210 may increase the amount of power transmitted by the communication circuit 220 to the antenna 230 while satisfying the SAR standard by controlling the amount of power transmitted by the communication circuit 220 to the antenna 230 using the final power limit value.

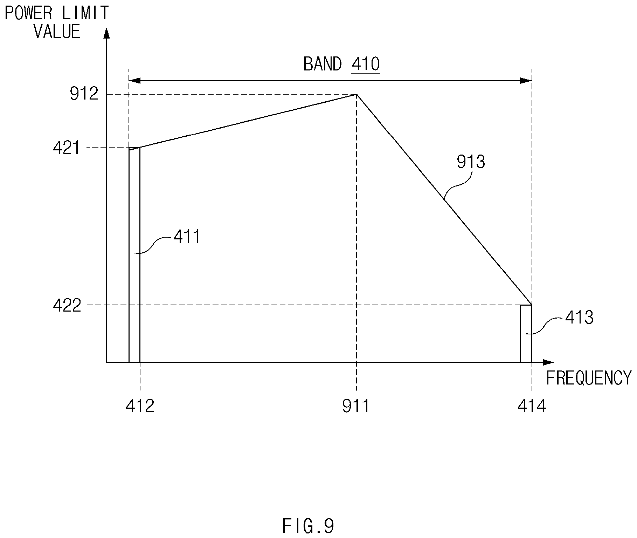

FIG. 9 is a view illustrating that an amplifier connected to an antenna (e.g., the antenna 230 in FIG. 2) of an electronic device (e.g., the electronic device 101 in FIG. 1) according to the disclosure generates interpolation data 913 when the amplifier has different gain values depending on the frequency.

The amplifier may be connected to the antenna 230. The amplifier may include an amplifier circuit (e.g., at least one power amplifier) that amplifies the intensity of a signal. The amplifier connected to the antenna 230 may have a gain value (e.g., a gain of at least one power amplifier) that changes depending on a change in frequency. For example, the amplifier connected to the antenna 230 may have a gain value that decreases as the frequency increases within the band 410, and then increases after the frequency corresponding to an inflection point 911. When the gain value of the amplifier connected to the antenna 230 decreases, the intensity of an RF signal transmitted from the antenna 230 may decrease even when the amount of power transmitted by the communication circuitry 220 to the antenna 230 remains the same. Accordingly, when the gain value of the amplifier connected to the antenna 230 decreases, a power limit value may increase. Conversely, when the gain value of the amplifier connected to the antenna 230 increases, the intensity of the RF signal transmitted from the antenna 230 may increase even when the amount of power transmitted by the communication circuit 220 to the antenna 230 remains the same. Accordingly, when the gain value of the amplifier connected to the antenna 230 increases, the power limit value may decrease. As a result, when the gain value of the amplifier connected to the antenna 230 decreases as the frequency increases within the band 410, and then the gain value of the amplifier connected to the antenna 230 increases after the frequency corresponding to the inflection point 911, the power limit value may increase as the frequency increases within the band 410, and then the power limit value may decrease after the frequency corresponding to the inflection point 911.

A processor (e.g., the communication processor 210 in FIG. 2) of the electronic device 101 may measure an intermediate power limit value 912, which is the power limit value at the inflection point 911 where a change trend of the gain value of the amplifier connected to the antenna 230 changes. The processor 210 may interpolate at least two power limit values 421 and 422 and the intermediate power limit value 912 to generate the interpolation data 913. The processor 210 may generate the interpolation data 913 in which frequency characteristics of the antenna 230 are reflected. The processor 210 may map the highest frequency of the allocated resource block to the interpolation data 913 in which the frequency characteristics of the antenna 230 are reflected to calculate a final power limit value suitable for the frequency characteristics of the antenna 230. The processor 210 may control the amount of power transmitted by the communication circuit 220 to the antenna 230 using the final power limit value suitable for the frequency characteristics of the antenna 230. The processor 210 may increase the amount of power transmitted by the communication circuit 220 to the antenna 230 while satisfying the SAR standard by controlling the amount of power transmitted by the communication circuit 220 to the antenna 230 using the final power limit value suitable for the frequency characteristics of the antenna 230.

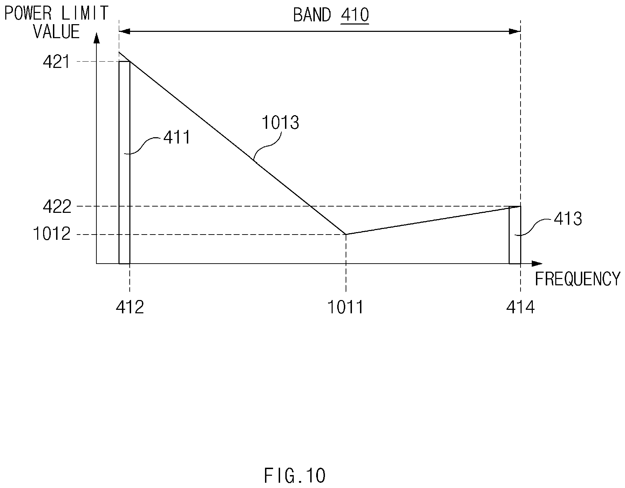

FIG. 10 is a view illustrating that an amplifier connected to an antenna (e.g., the antenna 230 in FIG. 2) of an electronic device (e.g., the electronic device 101 in FIG. 1) according to the disclosure generates interpolation data 1013 when the amplifier has different gain values depending on the frequency.

The amplifier connected to the antenna 230 may have a gain value that changes depending on a change in frequency. For example, the amplifier connected to the antenna 230 may have a gain value that increases as the frequency increases within the band 410, and then decreases after the frequency corresponding to an inflection point 1011. When the gain value of the amplifier connected to the antenna 230 increases as the frequency increases within the band 410, and then the gain value of the amplifier connected to the antenna 230 decreases after the frequency corresponding to the inflection point 1011, the power limit value may decrease as the frequency increases within the band 410, and then the power limit value may increase after the frequency corresponding to the inflection point 1011.

A processor (e.g., the communication processor 210 in FIG. 2) of the electronic device 101 may measure an intermediate power limit value 1012, which is the power limit value at the inflection point 1011 where a change trend of the gain value of the amplifier connected to the antenna 230 changes. The processor 210 may interpolate at least two power limit values 421 and 422 and the intermediate power limit value 1012 to generate the interpolation data 1013. The processor 210 may generate the interpolation data 1013 in which frequency characteristics of the antenna 230 are reflected. The processor 210 may map the highest frequency of a resource block allocated to the electronic device 101 to the interpolation data 1013 in which the frequency characteristics of the antenna 230 are reflected to calculate a final power limit value suitable for the frequency characteristics of the antenna 230. The processor 210 may control the amount of power transmitted by the communication circuit 220 to the antenna 230 using the final power limit value suitable for the frequency characteristics of the antenna 230. The processor 210 may increase the amount of power transmitted by the communication circuit 220 to the antenna 230 while satisfying the SAR standard by controlling the amount of power transmitted by the communication circuit 220 to the antenna 230 using the final power limit value suitable for the frequency characteristics of the antenna 230.

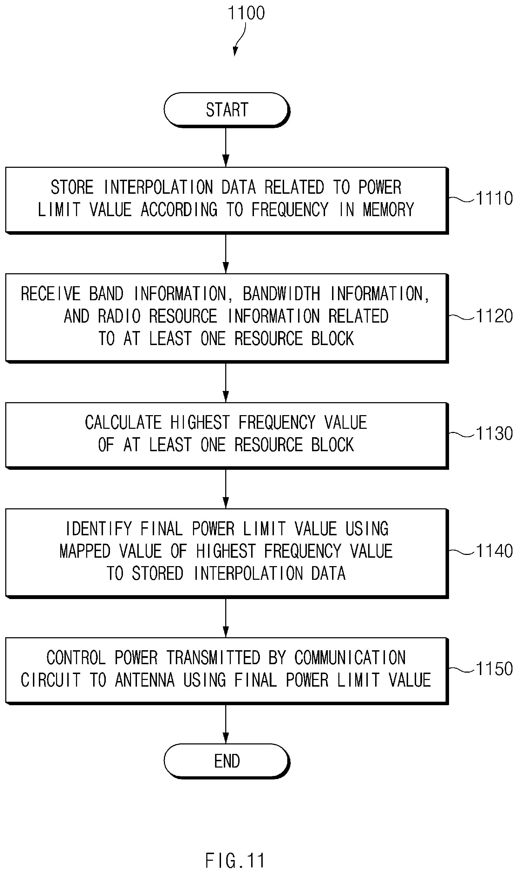

FIG. 11 is a flowchart 1100 illustrating a method of controlling transmission power of wireless communication performed by an electronic device (e.g., the electronic device 101 in FIG. 1) according to the disclosure.

The manufacturer of the electronic device 101 may store interpolation data related to a power limit value according to frequency in operation 1110 in memory (e.g., the memory 130 in FIG. 2). For example, the manufacturer of the electronic device 101 may store interpolation data generated by interpolating at least two power limit values in the memory 130 when the electronic device 101 is shipped.

The power limit value may represent a maximum transmission power value of the communication circuit 220 set to maintain a specific absorption rate (SAR) by an RF signal output through an antenna (e.g., the antenna 230 in FIG. 2) of the electronic device 101 below the specified specific absorption rate standard. The power limit value may vary depending on the frequency. Since the SAR increases as the frequency increases due to physical properties, the power limit value may decrease as the frequency increases.

At least two power limit values may be set to satisfy the specific absorption rate standard at a frequency corresponding to at least one resource block. The at least two power limit values may be obtained by measuring power limit values at at least two frequencies belonging to the band. The at least two power limit values may be a lowest power limit value, which is a power limit value of the lowest resource block of the band, and a highest power limit value, which is a power limit value of the highest resource block of the band. The lowest resource block of the band may be a resource block with the lowest frequency among a plurality of resource blocks belonging to the band. The highest resource block of the band may be a resource block with the highest frequency among the plurality of resource blocks belonging to the band. For example, when there are 50 resource blocks in a B1 band, the lowest resource block in the B1 band may be 0RB, which has the lowest frequency among the 50 resource blocks, and the highest resource block may be 49RB, which has the highest frequency among the 50 resource blocks.

The manufacturer of the electronic device 101 may perform an operation that calculates values between the two values by connecting the two values with a straight line in order to perform an operation to interpolate the two values. The manufacturer of the electronic device 101 may calculate power limit values between the two power limit values by connecting the two power limit values with a straight line in order to interpolate two power limit values. Accordingly, the manufacturer of the electronic device 101 may calculate power limit values in a frequency range between frequency values corresponding to the two power limit values, respectively. For example, the manufacturer of the electronic device 101 may calculate power limit values corresponding to frequency values belonging to the entire band when interpolating the lowest power limit value and the highest power limit value. The manufacturer of the electronic device 101 may generate data in the form of a straight-line graph on the frequency axis using power limit values obtained as a result of interpolating two power limit values. The data in the form of a straight-line graph generated by the manufacturer of the electronic device 101 may be defined as interpolation data. The manufacturer of the electronic device 101 may store interpolation data in the memory 130.

A processor (e.g., the communication processor 210 in FIG. 2) of the electronic device 101 may receive band information, bandwidth information, and radio resource information related to at least one resource block in operation 1120. For example, the electronic device 101 may obtain or identify the band information, bandwidth information, and radio resource information from information received from a base station (e.g., the base station of the cellular network 240 in FIG. 2).

The band information may be information associated with the band that communication circuitry of the electronic device 101 (e.g., the communication circuit 220 in FIG. 2) uses for wireless communication. The band may be, for example, a frequency range specified by a 3^{RD} generation partnership project (3GPP) standard. For example, based on the frequency division duplexing (FDD) mode, the bands used for LTE communication may include B1 to B32, B65 to B76, and B85 to B88 bands. The electronic device 101 may obtain the band information during a process of searching for a cell to which the electronic device 101 is connected or connecting (e.g., attaching) a cell. The memory (e.g., the memory 130 in FIG. 2) may store information about the band (e.g., information about the band associated with the country, mobile network operation, and/or radio access technology (RAT)).

The bandwidth information may be information associated with a frequency bandwidth of a cell connected to the electronic device 101 by the base station. For example, the electronic device 101 may obtain the bandwidth information by receiving system information from the cell.

The radio resource information may be information related to at least one resource block allocated for use by the electronic device 101 for the wireless communication. The resource block may be a unit block that may be allocated to the electronic device 101 in terms of frequency. For example, the resource block may have a frequency bandwidth of 0.2 MHz. The electronic device 101 may be allocated at least one resource block that may be used for uplink signal transmission of the electronic device 101 from the base station. The electronic device 101 may receive information for allocating one or more resource blocks within a band from the base station (e.g., information on the number of resource blocks and information on a starting resource block). For example, the electronic device 101 may be allocated a plurality of consecutive resource blocks on a frequency axis. For example, the electronic device 101 may be allocated a plurality of resource blocks spaced apart from each other on the frequency axis. The number of at least one resource block allocated to the electronic device 101 may be variably set depending on a communication situation, a total number of terminals connected to the base station to which the electronic device 101 is connected, and the type of data transmitted through wireless communication performed by the electronic device 101.

The electronic device 101 may receive the band information, the bandwidth information, and the radio resource information from an external network (e.g., the cellular network 240 in FIG. 2). For example, the electronic device 101 may obtain the band information, the bandwidth information, and/or the radio resource information through network search (e.g., cell search), connection (e.g., attach), and/or resource allocation (e.g., uplink grant).

The processor 210 of the electronic device 101 may calculate the highest frequency value of at least one resource block in operation 1130. The processor 210 may calculate the highest frequency value of at least one resource block allocated to the electronic device 101 by adding a frequency range of at least one resource block to a starting frequency of at least one resource block allocated to the electronic device 101. For example, when the frequency range of one resource block is 0.2 MHz, the processor 210 may obtain the highest frequency value of at least one resource block allocated to the electronic device 101 by adding a value obtained by multiplying the number of allocated resource blocks by 0.2 MHz to the starting frequency of at least one resource block allocated to the electronic device 101.

The processor 210 of the electronic device 101 may identify a final power limit value using a mapped value of the highest frequency value to the interpolation data stored in operation 1140. The processor 210 may load interpolation data stored in the memory 130. The interpolation data stored in the memory 130 may include the power limit values mapped according to the frequency. The power limit values mapped according to the frequency, included in the interpolation data, may be generated by the method described in conjunction with FIG. 4. The mapped value of the highest frequency value may be identified from the power limit values mapped according to the frequency. The processor 210 may identify a final power value at the highest frequency value using the mapped value in the loaded interpolation data. The final power limit value may vary depending on the highest frequency value of at least one resource block allocated to the electronic device 101. The final power limit value may increase when the highest frequency value of at least one resource block allocated to the electronic device 101 is lowered.

The processor 210 of the electronic device 101 may limit the power transmitted by the communication circuit 220 to the antenna 230 using the final power limit value in operation 1150. The processor 210 may limit a maximum amount of power transmitted by the communication circuit 220 to the antenna 230 to the final power limit value. The processor 210 may increase the maximum amount of power transmitted by the communication circuit 220 to the antenna 230 when the highest frequency value is lowered. When the highest frequency value is lowered as described above, the processor 210 may increase the power transmitted by the electronic device 101 through the antenna 230 within a range that satisfies the specific absorption rate standard.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device comprising:
an antenna (230);
a communication circuitry (220) electrically connected to the antenna (230);
memory (130) that stores interpolation data (415) related to a power limit value according to a frequency; and
a processor (210) electrically connected to the communication circuitry (220),
wherein the processor (210) is configured to:
receive, from an external network (240), band information associated with a band (410) for wireless communication, bandwidth information associated with a frequency bandwidth, and radio resource information related to at least one resource block (RB) (511);
identify a highest frequency value (512) of the at least one resource block (511);
identify a final power limit value (521) using a value obtained by mapping the highest frequency value (512) to the interpolation data (415) stored in the memory (130); and
control, using the final power limit value (521), transmission power used in the communication circuitry (220) and the antenna (230), and
wherein the interpolation data (415) is generated based on interpolation of at least two power limit values (421, 422) corresponding to the band (410).

2. The electronic device of claim 1, wherein the final power limit value (521) is set to satisfy a specific absorption rate (SAR) standard at the highest frequency value (512).

3. The electronic device of claim 1, wherein the interpolation data (415) is generated by interpolating the at least two power limit values of the band (410) on a frequency axis.

4. The electronic device of claim 3, wherein the processor (210) is configured to:
measure a lowest power limit value (421) that is a power limit value of a resource block (411) of a lowest frequency of the band (410) and a highest power limit value (422) that is a power limit value of a resource block (413) of a highest frequency of the band (410); and
interpolate the lowest power limit value (421) and the highest power value (422) to generate the interpolation data (415).

5. The electronic device of claim 1, wherein the processor (210) is configured to map a highest frequency value (616) corresponding to a highest frequency resource block (615) among the at least one resource block (611, 612, 613, 614, 615) to the interpolation data (415) when the at least one resource block (611, 612, 613, 614, 615) is consecutively allocated on a frequency axis of the band (410).

6. The electronic device of claim 1, wherein the at least one resource block (711, 713) includes a first resource block (711) and a second resource block (713) that are spaced apart on a frequency axis of the band (410), and
the processor (210) is configured to map a first frequency value (712) that is a highest frequency value of the first resource block (711) and a second frequency value (714) that is a highest frequency value of the second resource block (713) to the interpolation data (415).

7. The electronic device of claim 1, further comprising an amplifier connected to the antenna (230),
wherein the interpolation data is generated by interpolating an intermediate power limit value (912, 1012) at an inflection point (911, 1011) where a change trend of a gain value according to a frequency of the amplifier changes, and the at least two power limit values (421, 422).

8. The electronic device of claim 1, wherein the processor 210 is configured to identify the highest frequency value (512, 616) based on a starting frequency of the at least one resource block (511) and the number of the at least one allocated resource block (511).

9. A method of controlling an electronic device (101), the method comprising:
receiving, from an external network (240), band information associated with a band (410) for wireless communication of the electronic device (101), bandwidth information associated with a frequency bandwidth, and radio resource information related to at least one resource block (RB) (511);
identifying a highest frequency value (512) of the at least one resource block (511);
identifying a final power limit value (521) using a value obtained by mapping the highest frequency value (512) to interpolation data (415) stored in memory (130) of the electronic device (101); and
controlling power of transmission signal using the final power limit value (521),
wherein the interpolation data (415) is generated based on interpolation of at least two power limit values (421, 422) corresponding to the band (410).

10. The method of claim 9, wherein the final power limit value (521) is set to satisfy a specific absorption rate (SAR) standard at the highest frequency value (512).

11. The method of claim 9, wherein the interpolation data (415) is generated by interpolating a lowest power limit value (421) that is a power limit value of a resource block (411) of a lowest frequency of the band (410) and a highest power limit value (422) that is a power limit value of a resource block 413 of a highest frequency of the band (410).

12. The method of claim 9, wherein the mapping of the highest frequency value (512) includes mapping a highest frequency value (616) corresponding to a highest frequency resource block (615) among the at least one resource block (611, 612, 613, 614, 615) to the interpolation data (415) when the at least one resource block (611, 612, 613, 614, 615) is consecutively allocated on a frequency axis of the band (410).

13. The method of claim 9, wherein the at least one resource block (711, 713) includes a first resource block (711) and a second resource block (713) that are spaced apart on a frequency axis of the band (410), and
the mapping of the highest frequency value (512) includes mapping a first frequency value (712) that is a highest frequency value of the first resource block (711) and a second frequency value (714) that is a highest frequency value of the second resource block (713) to the interpolation data (415).

14. The method of claim 9, wherein the interpolation data (415) is generated by interpolating an intermediate power limit value (912, 1012) at an inflection point (911, 1011) where a change trend of a gain value according to a frequency of an amplifier connected to an antenna of the electronic device changes, and the at least two power limit values (421, 422).

15. The method of claim 9, wherein the identifying of the final power limit value (512) includes identifying the highest frequency value (512, 616) based on a starting frequency of the at least one resource block (511) and the number of the at least one allocated resource block (511).
